# EUROPÄISCHE PATENTSCHRIFT

(11) **EP 0 866 609 B1**
(45) Veröffentlichungstag und Bekanntmachung des Hinweises auf die Patenterteilung: **19.07.2000**
(21) Anmeldenummer: 98108702.6
(22) Anmeldetag: 22.01.1994
(51) Int. Cl.: H04N 5/63

(54) **Videorecorder**
Videorecorder
Enregistreur vidéo

(30) Priorität: 30.01.1993 DE 4302636; 16.10.1993 DE 4335374
(43) Veröffentlichungstag der Anmeldung: 23.09.1998
(62) Teilanmeldung aus: 94100897.1
(73) Patentinhaber: DEUTSCHE THOMSON-BRANDT GMBH, 78048 Villingen-Schwenningen (DE)
(72) Erfinder: Bressau, Ernst, 44532 Lühnen (DE); Sagcob, Thomas, 78166 Donaueschingen (DE); Wäscher, Uli, 78052 Villingen-Schwenningen (DE); Rilly, Gerard, 78089 Unterkirnach (DE); Amann, Ulrich, Gilstead Mansion, Singapore 1130 (SG)

(56) Entgegenhaltungen:
- EP-A- 0 158 251
- EP-A- 0 167 737
- EP-A- 0 351 120
- EP-A- 0 477 891
- DE-A- 3 045 715
- GB-A- 2 257 879
- US-A- 4 903 130
- US-A- 4 905 187
- US-A- 5 113 294
- PATENT ABSTRACTS OF JAPAN vol. 3, no. 56 (E-110), 15.Mai 1979 & JP 54 035617 A (MATSUSHITA ELECTRIC IND CO), 15.März 1979,

## Beschreibung

Die Erfindung geht aus von einem Videorecorder gemäß dem Oberbegriff des Anspruchs 1. Bei einem derartigen Gerät ist der Standby-Betrieb im allgemeinen über längere Zeiträume eingeschaltet. Man ist daher bemüht, die Leistungsaufnahme des Gerätes aus dem Netz während des Standby-Betriebes möglichst gering zu halten.

Der Erfindung liegt die Aufgabe zugrunde, das Gerät so auszubilden, daß die während des Standby-Betriebes dem Netz entnommene Leistung weiter verringert wird. Diese Aufgabe wird durch die im Anspruch 1 angegebene Erfindung gelöst. Vorteilhafte Weiterbildungen der Erfindung sind in den Unteransprüchen angegeben.

Die erfindungsgemäße Lösung beinhaltet, daß nur die Funktionen eingeschaltet bleiben, die für ein einwandfreies Fernsehbild benötigt werden, wobei ein Rücksprung in den Normalbetrieb gewährleistet wird. Durch diese Betriebsart wird der Leistungsverbrauch auf ca. 2 Watt reduziert, wodurch sich eine Leistungsersparnis von 80 % ergibt. Bei 1.000.000 Geräten würde das eine Ersparnis von 16.000.000,-- DM im Jahr zur Folge haben.

In einem bekannten Videorecorder sind folgende Funktionswerte im Stand by Betrieb eingeschaltet:

Der sogenannte Powersplitter, er gibt das dem Videorecorder zugeführte Antennensignal an den Fernseher weiter.

Die Uhr, wegen der zeitlichen Überwachung für eventuell getätigte Aufnahmen.

Das Display, es dient zur Informationsmitteilung für den Bediener.

Das Keyboard, es wird benötigt, um das Gerät über die Bedientasten einzuschalten.

Der Kassetteneinzug, damit beim Zuführen einer Kassette das Gerät automatisch eingeschaltet wird.

Der Infrarotempfänger, er wird benötigt, um Informationen von der Fernbedienung aufnehmen zu können.

Discrambler Scart und Keyboardprozessor sind für interne Aufgaben aktiv.

Bei der Erfindung bleiben davon nur die Funktionen eingeschaltet, die für ein einwandfreies Fernsehbild benötigt werden, wobei ein Rücksprung in den Normalbetrieb gewährleistet wird. Dieses wird gelöst, indem der Powersplitter und die Uhr aktiv bleiben, um zum einen ein Fernsehbild zu ermöglichen und zum anderen eine zeitliche Überwachung zu gewährleisten. Desweiteren wird eine sogenannte Ökologik zeitweise aktiviert, die es ermöglicht, zeitgesteuert Aufnahmen auch weiterhin vorzunehmen. Der Leistungsverbrauch des Powersplitters, der Uhr und der Ökologik beträgt ca.2 Watt, im Gegensatz zu den vorher genannten 10 Watt, die bei normalem Stand by Betrieb verbraucht werden.

Das Aktivieren des Ökobetriebs wird mit der Ökotaste ermöglicht. Bei aktivem Ökobetrieb sind Funktionen wie Display, Kassetteneinzug, Keyboard und Infrarotempfänger nicht aktiv. Diese geringen Bedienungseinschränkungen werden durch die finanziellen und ökologischen Aspekte mehr als kompensiert. Der Ökobetrieb könnte zusätzlich auch über die Fernbedienung aktiviert werden.

Die Ökologik kontrolliert, wann der VCR vom normalen Ökobetrieb in den eingeschränkten Ökobetrieb geschaltet werden muß. Dieses ist bei Timeraufnahmen der Fall. Für zeitbedingte Aufnahmen aktiviert die Logik einmal am Tag z.B. um 0,00 Uhr den Prozessor, der für Aufnahmeaktivitäten benötigt wird, und kontrolliert, ob am folgenden Tag Timeraufnahmen getätigt werden müssen.

Liegt eine VPS-Programmierung für diesen Tag vor, wird in den eingeschränkten Ökobetrieb umgeschaltet, in dem die Funktionsgruppen, die für eine Aufnahme notwendig sind, zugeschaltet werden. Das Display, der Infrarotempfänger, das Keyboard und der Kassetteneinzug sind nach wie vor inaktiv. Ist die Aufnahme beendet, überprüft der Prozessor, ob für diesen Tag noch eine weitere Timeraufnahme vorliegt. Wenn nicht, geht das Gerät in den normalen Ökobetrieb über. Liegt eine Programmierung ohne VPS für diesen Tag vor, wird der Videorecorder zu angegebener Aufnahmezeit in den eingeschränkten Ökobetrieb umgeschaltet und die Aufnahme getätigt. Das Gerät geht, nach der letzten Aufnahme für diesen Tag, in den normalen Ökobetrieb über.

Die Erfindung ist also äußerst vorteilhaft, um für Videorecorder im Gegensatz zum jetzigen Stand der Technik eine Möglichkeit zu schaffen, den Energieverbrauch sinnvoll zu reduzieren.

Die Erfindung wird im folgenden anhand der Zeichnungen erläutert. Darin zeigen
- Fig. 1: Timerbetrieb im Ökomodus und
- Fig. 2: eine erfindungsgemäße Schaltung für das Verfahren gemäß Fig. 1.

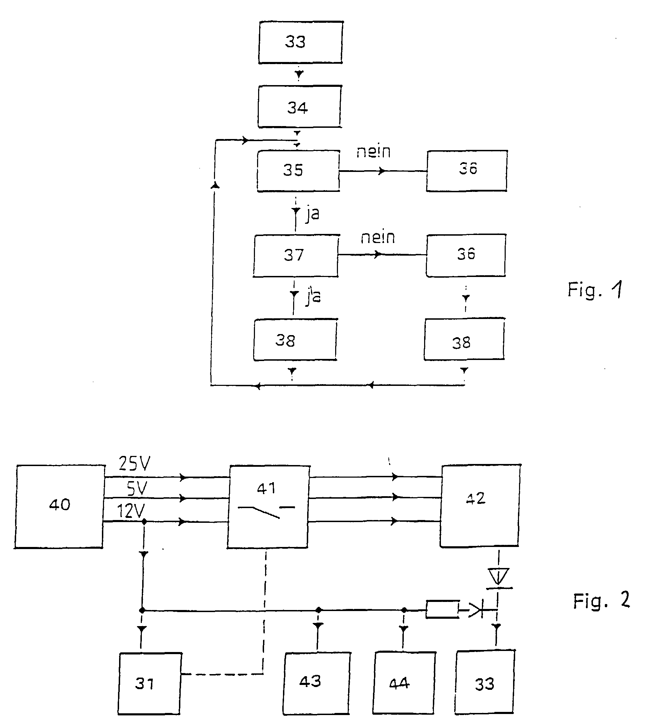

Fig. 1 zeigt den Timerbetrieb im Ökobetrieb. Die Uhr 33 steuert den Datumwechsel 34, welcher das Datum im Timer-Prozessor 35 aktualisiert. Anschließend erfolgt eine Timerplatzabfrage für dieses Datum. Liegt keine Programmierung vor, geht der Videorecorder in den normalen Ökobetrieb 36. Liegt eine Programmierung vor, wird geprüft, ob es eine VPS-Programmierung 37 ist. Liegt keine VPS-Programmierung vor, bleibt der Videorecorder im normalem Ökobetrieb 36 und geht erst mit Beginn der Aufnahme in den eingeschränkten Ökobetrieb 38, um dann den Timerplatz abzuarbeiten. Bei vorhandener VPS-Programmierung wird sofort der eingeschränkte Ökobetrieb 38 aktiviert, um bei Empfang des zugehörigen VPS-Signals den Timerplatz abzuarbeiten. Nach der jeweiligen Aufnahme wird erneut eine Timerplatzabfrage vorgenommen, und zwar so oft, bis keine Programmierungen für diesen Tag mehr vorliegen. Ist dieses der Fall, geht der Videorecorder zurück in den normalen Ökobetrieb.

Fig. 2 zeigt die Funktionsblöcke eines VCR's mit eingebundener Ökologik. Das Schaltnetzteil 40 hat Verbindung mit dem Stand-By-Schalter 41 und der Öko-Logik 31, die den Stand-By-Schalter aktiviert bzw. deaktiviert. Außerdem werden der Powersplitter 43 und die Uhr 33 permanent mit Spannung versorgt. Im normalen Ökobetrieb werden die nicht benötigten Funktionsblöcke 42 Kassetteneinzug, IR-Empfänger, Keyboard, Display und die Signalverarbeitung durch die Ökologik bzw. die Öko-Taste 31 abgeschaltet. Im Timermodus kann der VCR über die Öko-Logik in Verbindung mit der Uhr und dem Timer-Prozessor in den eingeschränkten Ökobetrieb umschalten.

Im Stand-By-Modus werden alle Funktionsblöcke aktiviert, die im normalen Ökobetrieb abgeschaltet werden (außer der Signalverarbeitung). Die Öko-Logik beinhaltet die Öko-Taste und ein Programm, das die zeitlichen Abläufe für die oben beschriebenen Betriebsarten steuert. Auf diese Weise werden die vier Betriebsarten (Normalbetrieb, Stand-By-Betrieb, normaler Ökomodus und eingeschränkter Ökomodus) realisiert.

## Patentansprüche

1. Videorecorder mit einer Eingangsbuchse zum Anschluß eines Signalgebers, einer Ausgangsbuchse zum Anschluß an den Signaleingang eines Fernsehempfängers und einer Übertragungsschaltung zwischen den Buchsen, wobei der Recorder in einen Normalbetrieb und einen Bereitschaftsbetrieb schaltbar ist, **dadurch gekennzeichnet**, daß ein Bedienmittel zum wahlweisen Einschalten einer weiteren Betriebsart (Ökobetrieb) vorgesehen ist, in der nur die Übertragungsschaltung und eine Zeitsteuereinheit aktiviert sind, und daß manuell auslösbare Schaltmittel zum Rücksprung in den Normalbetrieb vorgesehen sind.

2. Recorder nach Anspruch 1**, dadurch gekennzeichnet**, daß die Zeitsteuereinheit so ausgebildet ist, daß sie programmierte Aufnahmezeiten überwacht und rechtzeitig den Übergang von der weiteren Betriebsart in eine Aufnahmebereitschaft auslöst und/oder daß die Überwachung dadurch erfolgt, daß zu bestimmten Zeiten wie z.B. 00,00 Uhr jedes Tages der Prozessor aktiviert wird, der für Aufnahmeaktivitäten benötigt wird und/oder daß eine automatische Umschaltung von der weiteren Betriebsart in eine Aufnahmebereitschaft ausgelöst wird, wenn für den betroffenen Tag eine vorgenommene VPS-Programmierung erkannt wird.

3. Recorder nach Anspruch 1 oder 2, **dadurch gekennzeichnet**, daß in der eingeschalteten Aufnahmebereitschaft nur die Funktionsgruppen zugeschaltet sind, die für eine zeitgesteuerte Aufnahme notwendig sind.

4. Recorder nach Anspruch 1, 2 oder 3, **dadurch gekennzeichnet**, daß dann, wenn eine programmierte Aufnahme erfolgt ist und für denselben Tag keine weitere VPS-Programmierung erkannt wird, automatisch eine Umschaltung in die weitere Betriebsart erfolgt und/oder daß dann, wenn für den betroffenen Tag keine VPS-Programmierung, aber eine Programmierung ohne VPS erkannt wird, der Recorder in der weiteren Betriebsart bleibt und zu der programmierten Aufnahmezeit in die Aufnahmebereitschaft umgeschaltet wird.

5. Verfahren für einen Timerbetrieb eines Videorecorders, der eine Eingangsbuchse zum Anschluß eines Signalgebers, eine Ausgangsbuchse zum Anschluß an den Signaleingang eines Fernsehempfängers und eine Übertragungsschaltung zwischen diesen Buchsen aufweist, wobei der Recorder in einen Normalbetrieb und einen Bereitschaftsbetrieb schaltbar ist, **dadurch gekennzeichnet,** daß der Videorecorder einen Ökobetrieb (36) aufweist, in dem nur die Übertragungsschaltung und eine Zeitsteuereinheit eingeschaltet sind, und daß in diesem Betrieb durch die Zeitsteuereinheit programmierte Aufnahmezeiten überwacht werden und rechtzeitig der Übergang von diesem Betrieb in eine Aufnahmebereitschaft ausgelöst wird, indem zu bestimmten Zeiten, wie z. B. 00,00 Uhr jedes Tages, ein Prozessor aktiviert wird, der für Aufnahmeaktivitäten benötigt wird.

6. Verfahren nach Anspruch 5, **dadurch gekennzeichnet,** daß im Falle einer Timerprogrammierung für diesen Tag der Videorecorder in einen eingeschränkten Ökobetrieb (38) übergeht, um diesen Timerplatz abzuarbeiten.

7. Verfahren nach Anspruch 5 oder 6, **dadurch gekennzeichnet,** daß im Falle einer VPS-Programmierung sofort der eingeschränkte Ökobetrieb (38) aktiviert wird, um dann diesen Timerplatz abzuarbeiten.

8. Verfahren nach Anspruch 7, **dadurch gekennzeichnet,** daß dann, wenn eine programmierte Aufnahme erfolgt ist und für denselben Tag keine weitere VPS-Programmierung (37) erkannt wird, automatisch eine Umschaltung in den Ökobetrieb (36) erfolgt und/oder daß dann, wenn für den betroffenen Tag keine VPS-Programmierung (37), aber eine Programmierung ohne VPS erkannt wird, der Recorder in dem Ökobetrieb (36) bleibt und zu der programmierten Aufnahmezeit in die Aufnahmebereitschaft umgeschaltet wird.

## Claims

1. Video recorder including an input terminal for connecting a signal source thereto, further including an output terminal for being connected to the signal input of a television receiver and further including a transmission circuit provided between said terminals wherein the recorder can be switched into a normal mode and into a standby mode,
**characterized in that** an operating means is provided for selectively switching on a further mode of operation (economy mode) during which mode only said transmission circuit and a timer unit are activated and that manually actuatable switching means are provided for causing a return into the normal mode.

2. Recorder according to claim 1, **characterized in that** said timer unit is arranged in such a way that it monitors programmed record times and initiates in time the transition from the further mode of operation into a record standby and/or the monitoring is performed by activating said processor at predetermined moments, e. g. 00,00 o'clock of each day said processor being needed for the record activities and/or an automatic switching from said further mode of operation into a record standby is initiated if a performed VPS programming is recognized for the respective day

3. Recorder according to claim 1 or 2, **characterized in that,** during switched-on record stand-by only those function groups are switched on which are needed for a timer-controlled record.

4. Recorder according to anyone of claims 1, 2 or 3, **characterized in that,** in case a programmed record has been performed and no further VPS programming is recognized for the same day switching into said further mode of operation is performed automatically and/or that in case no VPS programming for the respective day, however a programming without VPS is recognized the recorder remains in said further mode of operation and is switched into the record standby mode at the programmed record time.

5. Method for a timer controlled operation of a video recorder including an input terminal for connecting a signal source thereto, further including an output terminal for being connected to the signal input terminal of a television receiver and further including a transmission circuit between said terminals wherein the recorder can be switched into a normal mode and into a standby mode,
**characterized in that** the video recorder includes an economy mode (36) during which only the transmission circuit and a timer unit are switched on and that within said mode programmed record times are monitored by said timer unit and the transition from this mode into a record standby mode is initiated in time by activating a processor which is needed for the record activities at predetermined moments, e. g. that 00.00 o'clock of each day.

6. Method according to claim 5, **characterized in that** in case of a timer programming for this day the video recorder changes to a limited economy mode (38) for this day in order to process said timer location.

7. Method according to claim 5 or 6, **characterized in that** in case of a VPS programming said economy mode (38) is acitivated immediately in order to process said timer location.

8. Method according to claim 7, **characterized in that**, if a programmed record has been made and no further VPS programming (37) is recognized for the same day switching into the economy mode (36) occurs automatically and/or that in case no VPS programming (37) but a programming without VPS is recognized for the respective day the recorder remains within the economy mode (36) and is switched into record standby mode at the programmed record time.

## Revendications

1. Enregistreur vidéo ayant une prise d'entrée pour la connexion d'un générateur de signal, une prise de sortie pour la connexion d'un récepteur de télévision à l'entrée de signal et un circuit de transmission entre les prises, où l'enregistreur est commutable sur un mode de fonctionnement normal et un mode de veille, **caractérisé en ce**
qu'un moyen de commande pour sélectionner la commutation d'un autre type de fonctionnement (mode éco), dans lequel seuls le circuit de transmission et une unité de commande de programmation sont activés, est prévu,
et que des moyens de commutation à usage manuel sont prévus pour le retour en mode de fonctionnement normal.

2. Enregistreur selon la revendication 1 **caractérisé en ce que** l'unité de commande de programmation est configurée de telle sorte qu'elle contrôle les temps d'enregistrement programmés et déclenche ponctuellement le passage du mode de fonctionnement plus large en mode veille pour enregistrement et/ou que le contrôle s'effectue par le fait qu'à certaines heures, par exemple à 00h00 chaque jour, le processeur, qui est nécessaire pour les activités d'enregistrement, est activé et/ou qu'une permutation automatique du mode de fonctionnement plus large en mode de veille pour enregistrement est déclenchée lorsque, pour le jour concerné, une programmation SPV entreprise est reconnue.

3. Enregistreur selon la revendication 1 ou 2, **caractérisé en ce que** lorsque le mode veille pour enregistrement est commuté, seuls les groupes de fonctions nécessaires à un enregistrement commandé par programmation sont branchés.

4. Enregistreur selon la revendication 1, 2 ou 3 **caractérisé en ce que** lorsqu'un enregistrement programmé a eu lieu et aucune autre programmation SPV n'est détectée pour le même jour, une commutation en mode de fonctionnement plus large se produit automatiquement et/ou si pour le jour concerné aucune programmation SPV mais une programmation sans SPV est détectée, l'enregistreur reste en mode de fonctionnement plus large et passe en mode veille pour enregistrement à l'heure d'enregistrement programmée.

5. Procédé pour le fonctionnement d'un dispositif de programmation d'un enregistreur vidéo qui présente une prise d'entrée pour la connexion d'un générateur de signal, une prise de sortie pour la connexion d'un récepteur de télévision à l'entrée de signal et un circuit de transmission entre les prises, où l'enregistreur est commutable sur un mode de fonctionnement normal et un mode de veille, **caractérisé en ce que** l'enregistreur vidéo présente un mode de fonctionnement éco (36), dans lequel seuls le circuit de transmission et une unité de commande de programmation sont activés, et que dans ce mode de fonctionnement les temps d'enregistrement programmés sont contrôlés par l'unité de commande de programmation et ponctuellement le passage de ce mode de fonctionnement en mode veille pour enregistrement est déclenché par le fait qu'à des moments donnés, par exemple 00h00 chaque jour, un processeur, qui est nécessaire pour les activités d'enregistrement, est activé.

6. Procédé selon la revendications 5 **caractérisé ce que** dans le cas d'une programmation du dispositif temporisateur pour cette journée, l'enregistreur vidéo passe dans un mode de fonctionnement éco restreint (38) pour prendre en charge cette plage de programmation.

7. Procédé selon la revendications 5 ou 6, **caractérisé ce que** dans le cas d'une programmation SPV, le mode de fonctionnement éco restreint (38) est aussitôt activé pour prendre ensuite en charge cette plage de programmation.

8. Procédé selon la revendications 7, **caractérisé ce que** lorsqu'un enregistrement programmé a eu lieu et aucune autre programmation SPV (37) n'est détectée pour le même jour, une commutation en mode de fonctionnement éco (36) se produit automatiquement et/ou si pour le jour concerné aucune programmation SPV (37) mais une programmation sans SPV est détectée, l'enregistreur reste en mode de fonctionnement éco (36) et passe en mode veille pour enregistrement à l'heure d'enregistrement programmée.
